Europäisches Patentamt

European Patent Office

Office européen des brevets

(11) Veröffentlichungsnummer: **0 296 261 B1**

# (12) EUROPÄISCHE PATENTSCHRIFT

(45) Veröffentlichungstag der Patentschrift: **15.04.92**

(21) Anmeldenummer: **87108889.4**

(22) Anmeldetag: **22.06.87**

(51) Int. Cl.⁵: **B01F 15/04**

Die Akte enthält technische Angaben, die nach dem Eingang der Anmeldung eingereicht wurden und die nicht in dieser Patentschrift enthalten sind.

(54) **Einrichtung zum Zubereiten von gewichtsdosierten Mischungen, insbesondere Viehfuttermischungen.**

(43) Veröffentlichungstag der Anmeldung:
**28.12.88 Patentblatt 88/52**

(45) Bekanntmachung des Hinweises auf die Patenterteilung:
**15.04.92 Patentblatt 92/16**

(84) Benannte Vertragsstaaten:
**DE**

(56) Entgegenhaltungen:
**FR-A- 1 480 782    FR-A- 2 152 846**
**GB-A- 903 403      US-A- 2 594 975**
**US-A- 3 574 344    US-A- 3 593 928**

(73) Patentinhaber: **WEDA-Dammann & Wester-kamp GmbH**

**W-2849 Goldenstedt 2 - Lutten(DE)**

(72) Erfinder: **Fahlbusch, Klaus**
**Paul Keller Strasse 19**
**W-2848 Vechta 1.O.(DE)**

(74) Vertreter: **Busse & Busse Patentanwälte**
**Postfach 1226 Grosshandelsring 6**
**W-4500 Osnabrück(DE)**

**Beschreibung**

Die Erfindung bezieht sich auf eie Einrichtung zum Zubereiten von gewichtsdosierten Mischungen aus pulverigen, körnigen, kleinstückigen, pastösen und/oder flüssigen Gutbestandteilen, insbesondere von pumpfähigen Viehfuttermischungen, gemäß dem Oberbegriff des Patentanspruchs 1.

Bei bekannten Einrichtungen dieser Art, die zur Zubereitung von pumpfähigen Viehfuttermischungen Anwendung finden, ist ein Behälter als Anmischbehälter ausgebildet und der Wiegevorrichtung zugeordnet. Ein oder mehrere weitere Behälter bilden unvorwogene Speicherbehälter, in denen im Anmischbehälter zubereitete gewichtsdosierte Futtermischungen, insbesondere solche unterschiedlicher Rezepturen, vorübergehend aufbewahrt werden, bis sie entweder den Speicherbehältern zu Fütterungszwecken direkt oder auf dem Wege über den Anmischbehälter Verbraucherstellen zugefördert werden. Bei direkter Zuführung des Inhalts unverwogener Behälter zu Verbraucherstellen benötigt die Einrichtung besondere Meßvorrichtungen, z.B. Durchlauf-Mengenmeßvorrichtungen, um die jeweils einer Verbraucherstelle zuzuführende Futtermischung mengenmäßig dosieren zu können. Dies ist aufwendig, und Meßdifferenzen zwischen der Wiegevorrichtung des Anmischbehälters und solchen weiteren, anderen Meßgeräten bereiten Schwierigkeiten bei der einwandfreien Erfassung und Steuerung der Fütterung durch die Auswerteeinrichtung. Derartige Probleme entfallen zwar, wenn die Förderung von Futtermengen aus den weiteren Behältern zu den Verbraucherstellen über den verwogenen Anmischbehälter vorgenommen wird, jedoch geht dies mit erheblichen Zeitverlusten einher, während ferner bei unterschiedlichen Rezepturen der Futtermengen in einzelnen Behältern stets der Inhalt zunächst des Anmischbehälters und dann der gesamte Inhalt eines Speicherbehälters verfüttert werden muß, bevor auf einen anderen Speicherbehälter übergegangen werden kann.

Grundsätzlich besteht auch die Möglichkeit, bei Vorsehen mehrerer Behälter jeden Behälter mit einer eigenen Wiegevorrichtung auszustatten, um auf diese Weise zwischengelagerte Futtermengen gewichtsdosiert austragen zu können, ohne hierfür den Anmischbehälter benutzen zu müssen. Eine derartige Ausgestaltung ist aber besonders aufwendig.

Der Erfindung liegt die Aufgabe zugrunde, eine Einrichtung der eingangs genannten Art zu schaffen, die bei geringem Bauaufwand eine exakte Gewichtserfassung der Mischungsbestandteile bei der Erstellung gewichtsdosierter Mischung erlaubt, eine präzise Gewichtserfassung der Abgabemengen ermöglicht und dabei sicherstellt, daß unabhängig von einer vollständigen Entleerung der Behälter diesen Teilmengen beliebig entnommen werden können.

Die Erfindung löst diese Aufgabe ausgehend von einer Einrichtung nach dem Oberbegriff des Patentanspruchs 1 mit den in dessen kennzeichnenden Teil angegebenen Merkmalen. Hinsichtlich wesentlicher weiterer Ausgestaltungen wird auf die Patentansprüche 2 bis 12 verwiesen.

Die Erfindung schafft eine Einrichtung, die bevorzugt für die Zubereitung von Viehfuttermischungen bestimmt und geeignet ist, durchaus jedoch auch in anderen Bereichen, z.B. der chemischen Industrie, Anwendung finden kann, in denen gewichtsdosierte Mischungen unterschiedlicher Rezepturen und mit präziser Erfassung der Bestandteile und der Abgabemengen von Bedeutung sind. Die Einrichtung ermöglicht eine genaue Eindosierung der Bestandteile in die Behälter bei der Mischungsbildung sowie eine exakte Ausdosierung bei der Entnahme zu Zwecken irgendeiner Weiterverwendung, wobei die Einrichtung mit einer einzigen Wiegevorrichtung auskommt, deren Meßdaten eine einwandfreie Erfassung und Auswertung in Datenverarbeitungsgeräten zuläßt. Die einfache ständige Mitführbarkeit aller Meßdaten der Wiegevorrichtung ermöglicht es, den Zustand der einzelnen Mischungen zu jedem Augenblick abfragen und zu Auswertungszwecken heranziehen zu können.

Eine weitere besonders interessante Möglichkeit bietet die Einrichtung nach der Erfindung bei einer Ausgestaltung, bei der die Gewichtskräfte einzelner Behälter mit einem Untersetzungsverhältnis auf den Meßwertaufnehmer der Wiegevorrichtung übertragen werden. Dies erlaubt es, Behälter stark unterschiedlicher Fassungsvermögen vorzusehen und Mischungen zu erstellen, deren Mengen bei gleicher relativer Meßgenauigkeit um eine oder mehrere Größenordnungen voneinander differieren.

Eine weitere, besonders bedeutsame Ausgestaltung der Erfindung gemäß Anspruch 11 ermöglicht es, mit der Einrichtung eine Vormischungskonzeption zu verwirklichen, bei der Endmischungen durch Überführung von Mengenanteilen einer Mischung oder Substandz aus einem Behälter der Mischung in einem anderen Behälter hinzugefügt werden können.

Zahlreiche weitere Einzelheiten ergeben sich aus der nachfolgenden Beschreibung und der Zeichnung, in der mehrere Ausführungsbeispiele des Gegenstands der Erfindung schematisch näher veranschaulicht sind. In der Zeichnung zeigen:

Fig.1 eine Seitenansicht einer erfindungsgemäßen Einrichtung mit drei Behältern,

Fig. 2 in abgebrochener Darstellung die vergrößerte Einzelheit II in Fig. 1, teilweise im Schnitt,

Fig. 3   eine Ausführung der Einrichtung nach Fig. 1 mit zentralgesteuerten Einzelzuläufen zu den Behältern, und

Fig. 4   eine Ausführung der Einrichtung nach Fig. 1 als intergrierter Bestandteil eines die Behälter untereinander wahlweise beliebig verbindenden Rohrleitungssystems.

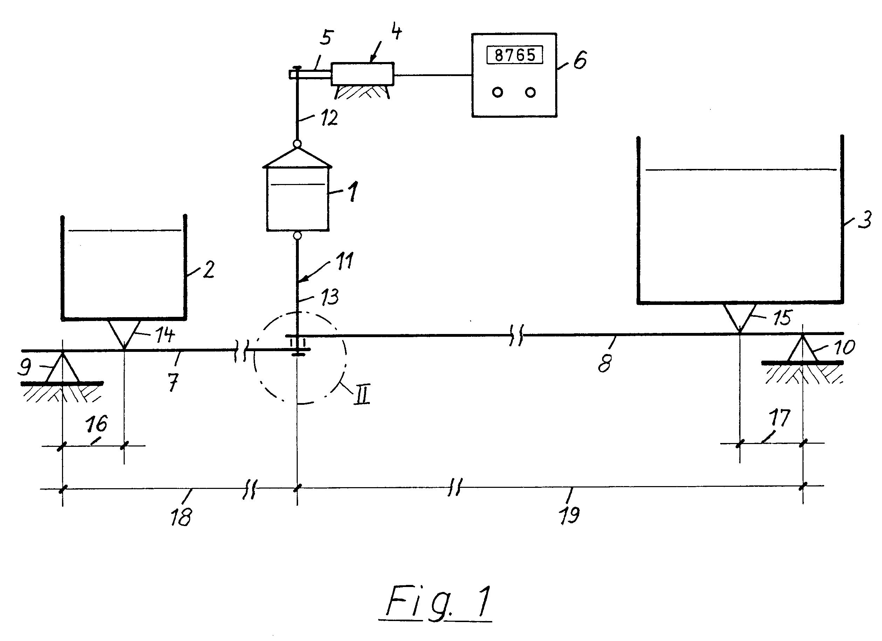

Die in Fig. 1 veranschaulichte Einrichtung zum Zubereiten von gewichtsdosierten Mischungen, umfaßt zumindest zwei, bei dem dargestelten Beispiel drei Behälter 1,2,3, die als Anmischbehälter mit eignem Rührwerk ausgebildet sind, eine Wiegevorrichtung 4 mit einem Meßwertaufnehmer 5, z.B. einem Dehnungsmeßstreifen sowie eine EDV-Auswertevorrichtung 6 zur fortlaufenden Aufnahme und -verarbeitung der dieser von der Wiegevorrichtung 4 zugeführten Meßdaten. Bevorzugt umfaßt diese Auswertevorrichtung 6 auch ein Zentralsteuergerät, das in nachstehend noch zu beschreibender Weise die Funktionsabläufe der Einrichtung steuert und kontrolliert.

Die Wiegevorrichtung 4 hat bevorzugt eine Auflösung von 1g und einen Erfassungsumfang von 20000 Einheiten. Dabei kann der Behälter 1 bei grammgenauer Erfassung für die Aufnahme einer Mischung in der Gesamtmenge von maximal 20 kg, der Behälter 2 für die 0,1 kg-genaue Aufnahme von Mischungen einer Gesamtmenge von maximal 2000 kg und der Behälter 3 für die Aufnahme einer Mischung in der Gesamtmenge von maximal 20000 kg bei einer Anzeigengenauigkeit von 1 kg ausgelegt sein. Es versteht sich jedoch, daß diese Auslegung den jeweiligen Anforderungen entsprechend beliebig gestaltet werden kann.

Der Behälter 1 ist vorzugsweise direkt am Meßwertaufnehmer 5 aufgehängt, so daß die Gewichtskräfte des Behälters 1 im Verhältnis 1:1 auf den Meßwertaufnehmer 5 übertragen werden.

Die Gewichtskräfte der Behälter 2 und 3 wirken in einem Untersetzungsverhältnis auf den Meßwertaufnehmer 5 der Wiegevorrichtung 4 ein, und zwar beträgt das Untersetzungsverhältnis für die Gewichtskräfte des Behälters 2 bei dem dargestellten Beispiel 1:100 und für die Gewichtskräfte des Behälters 3 1:1000. Auch diese Untersetzungsverhältnisse sind den jeweiligen Anforderungen entsprechend beliebig wählbar.

Zur Untersetzung der Gewichtskräfte der Behälter 2 und 3 ist je ein Wiegebalken 7,8 vorgesehen, der sich jeweils auf einem geeignetne Auflager 9,10, z.B. einem Schneidenlager, an seinen einen Ende abstützt und an seinem anderen Ende über eine bevorzugt gemeinsame Hängezugvorrichtung 11 am Meßwertaufnehmer 5 der Wiegevorrichtung 4 angreift. Die dargestellte Hängezugvorrichtung 11 umfaßt zwei Zugstangen 12,13, zwischen die der erste Behälter 1 eingeschaltet ist.

Die Behälter 2,3 stützen sich ihrerseits über geeignete Auflager 14,15 auf ihrem Waagebalken 7 bzw. 8 ab, wobei der Abstand 16 bzw. 17 der Auflager 14,15 zu den Lagern 9 bzw. 10 bei vorgebener freier Waagebalkenlänge 18,19 das Untersetzungsverhältnis bestimmt. Eine Möglichkeit zur einfachen Veränderung des Untersetzungsverhältnisses besteht in einer Verlagerung der Behälter 2 oder 3 längs ihrem Waagebalken 7 bzw. 8.

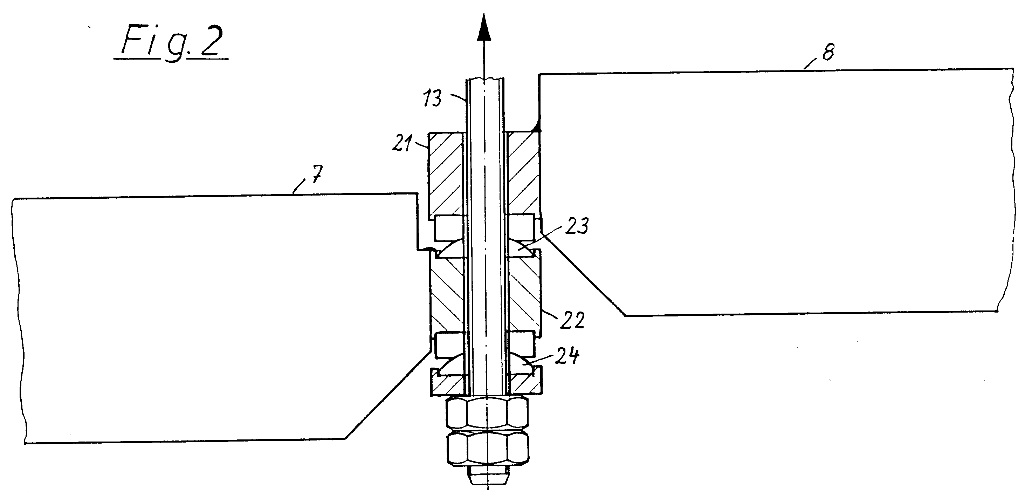

Zur Abstützung der freien (inneren) Enden der Waagebalken 7,8 sind diese, wie das insbesondere der Fig. 2 entnommen werden kann, mit Durchgangsösen 21 bzw. 22 versehen, von denen sich die Durchgangsöse 21 auf einer Kugelkalotte 23 auf der Oberseite der Durchgangsöse 22 und letztere auf einer Kugelkalotte 24 am unteren Ende der Zugstange 13 abstützt.

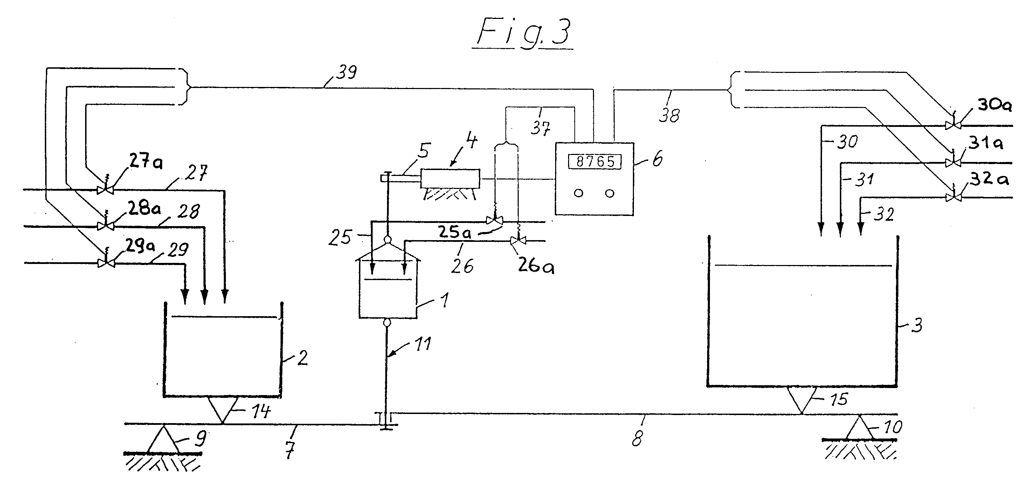

Bevorzugt sind, wie dies der Fig. 3 entnommen werden kann, jedem Behälter 1,2,3 eigene Gutzuläufe 25,26 bzw. 27,28,29 bzw. 30,31,32 zugeordnet, die jeweils durch Steuerventile, z.B. Elektromagnetventile, 25a-32a freigeb- bzw. absperrbar sind und zu nicht dargestellten Vorratsbehältern für die jeweils zur Verwendung vorgesehenen Substanzen, z.B. Futterbestandteile, führen.

Ihre Öffnungs- bzw. Schließbefehle erhalten die Steuerventile 25a-32a vom Zentralsteuergerät der Auswertevorrichtung 6 über die bei 37,38 bzw. 39 angedeuteten elektrischen Steuerleitungen.

Geht man von leeren Behältern 1,2,3 aus, so können nun in sämtlichen drei Behältern nacheinander Mischungen aus Bestandteilen jedweder Art und nach unterschiedlichsten Rezepturen hergestellt werden, wobei lediglich sicherzustellen ist, daß die Zufuhr von Mischungsbestandteilen zu einem Behälter 1,2 oder 3 nacheinander und die Beschickung der Behälter 1,2,3 ebenfalls nacheinander erfolgt. Die Wiegevorrichtung 4 erfaßt dann für jeden Behälter 1,2 bzw. 3 getrennt die in diese eingefüllten Anteilsmengen, und auch die Gesamtmischungmenge wird in der Auswertevorrichtung getrennt erfaßt, die zugleich auch durch Programmsteuerung die jeweils einer Mischung in einem Behälter angehörenden Substanzen und deren Mengenanteile vorgibt. Nach Fertigstellung der für jeden Behälter 1,2 bzw. 3 vorgesehenen Mischung, die bevorzugt in jedem Behälter 1,2,3 durch ein nicht dargesteltes Rührwerk aufbereitet wird, können die Mischungen nacheinander einer weiteren Verwendung zugeführt werden, wobei die ausgetragenen Mengen jeweils fortlaufend für jeden Behälter 1,2,3 von der Wiegevorrichtung 4 erfaßt und verarbeitet werden.

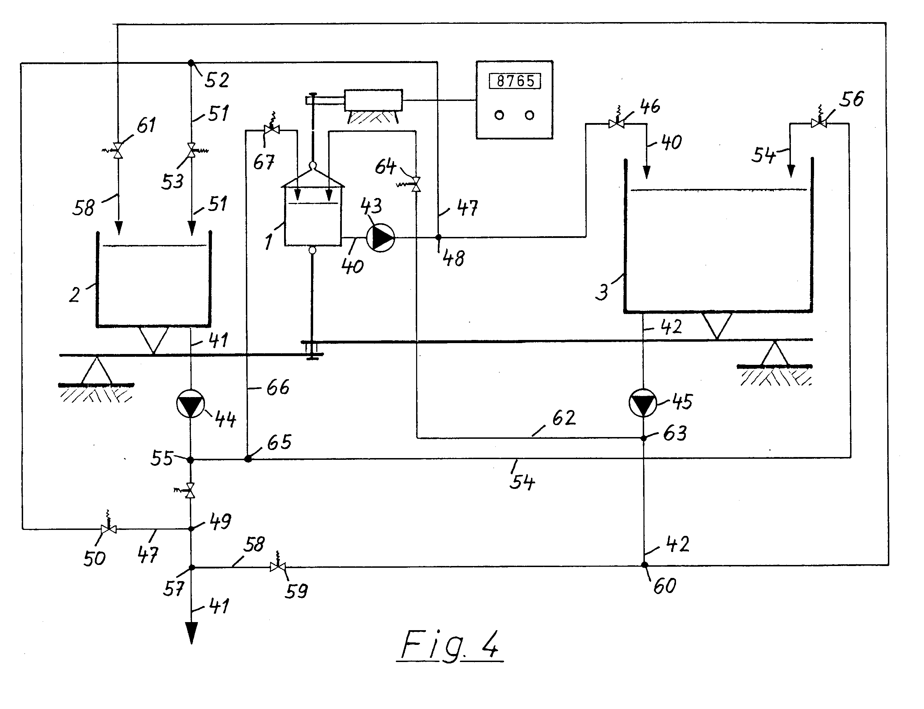

Die Fig. 4 veranschaulicht die Einrichtung nach Fig. 1 integriert in ein vernetztes Rohrleitungssystem, mit dessen Hilfe der Inhalt eines jeden Behälters 1,2,3 wahlweise in einen jeden anderen Behälter 1,2,3 überführbar ist. Im einzelnen umfaßt jeder Behälter eine Auslaufleitung 40, 41, 42, in die jeweils eine Förderpumpe 43,44,45 eingeschaltet ist. Die Auslaufleitung 40 aus dem Behälter 1 mündet in den Behälter 3 und umfaßt ein Steuerventil 46. Von der Auslaufleitung 40 mündet eine Verbindungsleitung 47 bei 48 aus, die bei 49 in die Auslaufleitung 41 einmündet und von einem Steuerventil 50 beherrscht ist. Aus der Verbindungsleitung 47 mündet eine Verbindungsleitung 51 bei 52 aus, die ein Steuerventil 53 umfaßt.

Aus der Auslaufleitung 41 mündet ferner eine Verbindungsleitung 54 bei 55 aus, die mit einem Steuerventil 56 versehen ist und in den Behälter 3 einmündet. Ferner mündet bei 57 aus der Auslaufleitung 41 ein Verbindungsleitung 58 mit einem Steuerventil 59 aus, an die bei 60 die Auslaufleitung 42 des Behälters 3 angeschlossen ist. Diese Verbindungsleitung 58 mündet nach Passieren eines weiteren Steuerventils 61 in den Behälter 2. Aus der Auslaufleitung 42 des Behälters 3 schließlich mündet eine Verbindungsleitung 62 bei 63 aus, die ein Steuerventil 64 aufweist und in den Behälter 1 einmündet. Schließlich mündet aus der Verbindungsleitung 54 bei 65 noch eine weitere Verbindungsleitung 66 mit Steuerventil 67 aus, die ebenfalls in den Behälter 1 einmündet.

Wie der Fig. 4 ohne weiteres entnommen werden kann, können ohne weiteres Anteile der Mischung aus dem Behälter 1 in den Behälter 2 und/oder 3 überführt werden, desgl. aus dem Behälter 2 in die Behälter 1 und/oder 3 bzw. aus dem Behälter 3 in die Behälter 1 und/oder 2. Sofern diese Vorgänge durch eine Programmsteuerung vorgegebenermaßen nacheinander ablaufen, werden sämtliche dieser Veränderungen gewichtgenau erfaßt, so daß zu jedem Zeitpunkt die in einem Behälter 1,2,3 vorhandene Mischung nach Gesamtmenge und Bestandteilen der Auswertevorrichtung vorliegt ist und für weitere Steuerungsfunktionen oder Kontrollen herangezogen werden kann.

Eine der Möglichkeiten, die eine derartige Vernetzung bietet, ist das sogenannte Auffetten von Mischungen mit ein und demgleichen Bestandteil, z.B. Eiweiß, das in einer Futtermischung für die Schweineendmast z.B. mit 12% in einer Futtermischung für die Mittelmast von Schweinen z.B. mit 15% und in einer Futtermischung für die Schweinevormast mit 18% enthalten sein kann. Enthält der Behälter 3 z.B. 20t eines Schweinefuttergemisches mit 12% Eiweiß, so können davon z.B. 10t ohne weiteres Verbraucherstellen einer Fütterungsanlage zugeführt werden, wonach die Mischung im Behälter 3 mit Eiweiß (oder einem Eiweißgemisch) aus dem Behälter 2 auf 15% Eiweiß aufgefettet werden kann. Davon können dann z.B. weitere 5t verfüttert werden, und wonach dann die Möglichkeit zur Auffettung der Restmischungsmenge im Behälter 3 auf 18% Eiweiß aus dem Behälter 2 besteht. Auch Sonderbestandteile, z.B. Arzneimittelmischungen etc., können nach Wahl z.B. aus dem Behälter 1 den Futtermischungen im Behälter 2 oder 3 zugeführt werden.

## Patentansprüche

1. Einrichtung zum Zubereiten von gewichtsdosierten Mischungen aus pulverigen, körnigen, kleinstückigen, pastösen und/oder flüssigen Gutbestandteilen, insbesondere von pumpfähigen Viehfuttermischungen, mit zumindest zwei Behältern (1,2,3) und einer Wiegevorrichtung (4), deren Meßwertaufnehmer (5) an eine Auswertevorrichtung (6) mit fortlaufender elektronischer Datenaufnahme und -verarbeitung angeschlossen ist, **dadurch gekennzeichnet,** daß sämtliche Behälter (1,2,3) gesondert mit Gutbestandteilen beschickbare Anmischbehälter bilden und die Gewichtskräfte der Behälter (1,2,3) gemeinsam auf den Meßwertaufnehmer (5) der Wiegevorrichtung (4) einwirken.

2. Einrichtung nach Anspruch 1, dadurch gekennzeichnet, daß die Gewichtskräfte einzelner Behälter (1,2,3) in einem Untersetzungsverhältnis auf den Meßwertaufnehmer (5) der Wiegevorrichtung (4) einwirken.

3. Einrichtung nach Anspruch 1 oder 2, dadurch gekennzeichnet, daß die Gewichtskräfte eines ersten Behälters (1) im Verhältnis 1:1, die eines zweiten Behälters (2) im Verhältnis 1:10 oder 1:100 und die eines dritten Behälters (3) im Verhältnis 1:100 bzw. 1:1000 untersetzt auf den Meßwertaufnehmer (5) der Wiegevorrichtung (4) einwirken.

4. Einrichtung nach einem der Ansprüche 1 bis 3, dadurch gekennzeichnet, daß ein Behälter (1) direkt am Meßwertaufnehmer (5) der Wiegevorrichtung (4) aufgehängt ist.

5. Vorrichtung nach eines der Ansprüche 2 bis 4, dadurch gekennzeichnet, daß zur Untersetzung der Gewichtskräfte eines Behälters (2,3) ein Waagebalken (7,8) vorgesehen ist.

6. Vorrichtung nach Anspruch 5, dadurch gekennzeichnet, daß das freie Ende des anderenends schwenkbar abgestützten Waagebalkens (7,8) über eine Hängezugvorrichtung (11) am Meßwertaufnehmer (5) der Wiegevorrichtung (4) angreift.

7. Einrichtung nach Anspruch 6, dadurch gekennzeichnet, daß eine gemeinsame Hängevorrichtung (11) für sämtliche Waagebalken (7,8) vorgesehen ist.

**8.** Vorrichtung nach einem der Ansprüche 4 bis 7, dadurch gekennzeichnet, daß der direkt aufgehängte Behälter (1) in die Hängezugvorrichtung (11) eingeschaltet ist.

**9.** Einrichtung nach einem der Ansprüche 6 bis 8, dadurch gekennzeichnet, daß eine Zugstange (13) der Hängezugvorrichtung(11) je eine Durchgangsöse (21,22) am freien Ende der Waagebalken (7,8) durchgreift und sich jede Durchgangsöse (21,22) jeweils auf einer Kugelkalotte (23;24) und der nächstunteren Durchgangsöse bzw. am unteren Stangenende abstützt.

**10.** Einrichtung nach einem der Ansprüche 1 bis 9, dadurch gekennzeichnet, daß die Auswertevorrichtung (6) ein Zentralsteuergerät für die Betätigung von ventilgesteuerten an Vorratsbehälter angeschlossenen Gutzuläufen (25-32) zu den jeweiligen Behältern (1,2,3) umfaßt.

**11.** Einrichtung nach einem der Ansprüche 1 bis 10,dadurch gekennzeichnet, daß die Behälter (1,2,3) bodenseitig an eine Auslaufleitung (40,41,42) angeschlossen sind, in die Auslaufleitungen (40,41,42) eine Förderpumpe (43,44,45) eingeschaltet ist und die Auslaufleitungen (40,41,42) Teil eines Steuerventils (z.B. 46) einschließenden, vernetzten Rohrleitungssystems bilden, durch das der Inhalt eines jeden Behälters (1,2,3) wahlweise in einen jeden anderen Behälter (1,2,3) überführbar ist.

**12.** Einrichtung nach einem der Ansprüche 1 bis 11, dadurch gekennzeichnet, daß die Förderpumpen (43,44,45) und die Steuerventile (z.B. 46) des Rohrleitungssystems sämtlich von dem der Auswertvorrichtung (6) zugeordneten Zentralsteuergerät betätigbar, insbesondere programmsteuerbar sind.

**Claims**

**1.** An apparatus for preparing weight-dispensed mixtures of powdered, granular, small-piece, pasty and/or liquid constituents, particularly of pumpable cattle feed mixtures, with at least two containers (1, 2, 3) and a weighing device (4), a measured value recorder (5) of which is connected to an evaluating device (6) with continuous electronic data acquiring and processing, characterised in that all containers (1, 2, 3) form mixing containers which can be separately charged with ingredients, the weight forces of the containers (1, 2, 3) acting jointly on the measured value recorder (5) of the weighing device (4).

**2.** An apparatus according to Claim 1, characterised in that the weight forces of individual containers (1, 2, 3) act on the measured value recorder (5) of the weighing device (4) in a reduction ratio.

**3.** An apparatus according to Claim 1 or 2, characterised in that the weight forces of a first container (1) act in the proportion 1:1 while those of a second container (2) act in the proportion of 1:10 or 1:100 while that of a third container (3) act in the proportion of 1:100 or 1:1000 stepped down to the measured value recorder (5) of the weighing device (4).

**4.** An apparatus according to one of Claims 1 to 3, characterised in that a container (1) is suspended directly from the measured value recorder (5) of the weighing device (4).

**5.** An apparatus according to one of Claims 2 to 4, characterised in that to resist the weight forces of a container (2, 4), a weighing beam (7, 8) is provided.

**6.** An apparatus according to Claim 5, characterised in that the free end of the weighing beam (7, 8) which is pivotally supported at the other end, engages the measured value recorder (7) of the weighing device (4) through a suspended traction device (11).

**7.** An apparatus according to Claim 6, characterised in that a common suspension device (11) is provided for all the weighing beams (7, 8).

**8.** An apparatus according to one of Claims 4 to 7, characterised in that the directly suspended container (1) is incorporated into the suspended traction device (11).

**9.** An apparatus according to one of Claims 6 to 8, characterised in that a draw bar (13) of the suspension traction device (11) passes through an aperture (21, 22) at the free end of the weighing beam (7, 8) and in that each eyelet (21, 22) is braced on a spherical cup (22, 23) on the closest downwardly through-flow eyelet or bottom rod end.

**10.** An apparatus according to one of Claims 1 to 9, characterised in that the evaluating device (6) comprises a central control device for actuating valve controlled goods feeds (25-32) connected to storage containers and conveying to the relevant containers (1, 2, 3).

11. An apparatus according to one of Claims 1 to 10, characterised in that the containers (1, 2, 3) are at their bottoms connected to a discharge pipe (40, 41, 42) and in that there is incorporated into the discharge device (40, 41, 42) a conveyor pump (43, 44, 45) and in that the run-out lines (40, 41, 42) include part of a control valve (e.g. 46) of which the cross-linked tubular line system is formed, by which the contents of each container (1, 2, 3) can optionally be transferred to each other container (1, 2 or 3).

12. An apparatus according to one of Claims 1 to 11, characterised in that delivery pumps (43, 44, 45) and the control valves (e.g. 46) of the pipeline systems can be actuated completely by the central control appliance which is associated with this evaluating apparatus (6) and can in particular be programme controlled.

**Revendications**

1. Dispositif pour la préparation de mélanges dosés par poids de constituants en poudre, en petits morceaux, pâteux et/ou liquides, en particulier de mélanges d'aliments pour animaux d'élevage, pompables, comportant au moins deux cuves (1, 2, 3) et un dispositif de pesage (4) dont le transducteur de mesure (5) est connecté à un dispositif d'évaluation (6) à saisie et traitement électroniques continus des données, caractérisé en ce que toutes les cuves (1, 2, 3) sont des cuves mélangeuses pouvant être alimentées séparément de constituants de mélange et les poids des cuves (1, 2, 3) agissent ensemble sur le transducteur de mesure (5) du dispositif de pesage (4).

2. Dispositif suivant la revendication 1, caractérisé en ce que les poids des cuves individuelles (1, 2, 3) agissent sur le transducteur de mesure (5) du dispositif de pesage (4) selon un rapport de réduction.

3. Dispositif suivant la revendication 1 ou 2, caractérisé en ce que le poids d'une première cuve (1) agit sur le transducteur de mesure (5) du dispositif de pesage (4) selon le rapport de 1:1, celui d'une deuxième cuve (2) selon le rapport de réduction de 1:10 ou de 1:100 et celui d'une troisième cuve (3) selon le rapport de réduction de 1:100 ou de 1:1000.

4. Dispositif suivant l'une quelconque des revendications 1 à 3, caractérisé en ce qu'une cuve (1) est suspendue directement au transducteur de mesure (5) du dispositif de pesage (4).

5. Dispositif suivant l'une quelconque des revendications 2 à 4, caractérisé en ce qu'un fléau (7, 8) est prévu pour assurer la réduction du poids d'une cuve (2, 3).

6. Dispositif suivant la revendication 5, caractérisé en ce que l'extrémité libre du fléau (7, 8) supporté à pivotement à son autre extrémité, agit sur le transducteur de mesure (5) du dispositif de pesage (4) par l'intermédiaire d'un dispositif de suspension à tirants (11).

7. Dispositif suivant la revendication 6, caractérisé en ce qu'un dispositif de suspension commun (11) pour tous les fléaux (7, 8) est prévu.

8. Dispositif suivant l'une quelconque des revendications 4 à 7, caractérisé en ce que la cuve (1) suspendue directement est insérée dans le dispositif de suspension à tirants (11).

9. Dispositif suivant l'une quelconque des revendications 6 à 8, caractérisé en ce qu'un tirant (13) du dispositif de suspension à tirants (11) traverse un oeil de passage (21, 22) prévu à l'extrémité libre de chacun des fléaux (7, 8) et chaque oeil de passage (21, 22) s'appuie sur une calotte sphérique (23, 24) prévue sur l'oeil de passage sous-jacent suivant ou sur l'extrémité inférieure du tirant.

10. Dispositif suivant l'une quelconque des revendications 1 à 9, caractérisé en ce que le dispositif d'évaluation (6) comprend un appareil de commande centrale pour l'actionnement d'alimentations d'aliments (25-32) commandées par des vannes, raccordées à des réservoirs de stockage et aboutissant aux cuves respectives (1, 2, 3).

11. Dispositif suivant l'une quelconque des revendications 1 à 10, caractérisé en ce que les cuves (1, 2, 3) sont raccordées par leur fond chacune à une conduite de décharge (40, 41, 42), une pompe d'alimentation (43, 44, 45) est installée dans chaque conduite de décharge (40, 41, 42) et les conduites de décharge (40, 41, 42) font partie d'un réseau de conduites comprenant une valve de commande (par exemple 46) par lequel le contenu de chaque cuve (1, 2, 3) peut être transféré, à volonté, dans chaque autre cuve (1, 2, 3).

12. Dispositif suivant l'une quelconque des revendications 1 à 11, caractérisé en ce que les pompes d'alimentation (43, 44, 45) et les valves de commande (par exemple 46) du réseau de conduites peuvent être actionnées toutes par l'appareil de commande centrale associé au dispositif d'évaluation (6), en particulier elles peuvent être commandées par programme.

_Fig. 1_

Fig.2

EP 0 296 261 B1

Fig.3

EP 0 296 261 B1

Fig. 4